# EUROPÄISCHE PATENTSCHRIFT

(11) **EP 0 939 984 B1**
(45) Veröffentlichungstag und Bekanntmachung des Hinweises auf die Patenterteilung: **30.05.2001**
(21) Anmeldenummer: 97950123.6
(22) Anmeldetag: 06.11.1997
(51) Int. Cl.: H02B 1/30, H02B 1/32, H02B 1/01

(54) **SCHALTSCHRANK**
SWITCHING CABINET
ARMOIRE DE DISTRIBUTION

(30) Priorität: 19.11.1996 DE 19647814
(43) Veröffentlichungstag der Anmeldung: 08.09.1999
(73) Patentinhaber: Rittal-Werk Rudolf Loh GmbH & Co. KG, 35745 Herborn (DE)
(72) Erfinder: NICOLAI, Walter, D-35418 Buseck (DE); MÜNCH, Udo, D-35764 Sinn (DE); STRACKBEIN, Heinrich, D-35444 Biebertal (DE)
(74) Vertreter: Fleck, Hermann-Josef, Dr.-Ing.
(86) Internationale Anmeldenummer: EP9706144
(87) Internationale Veröffentlichungsnummer: WO9823005

(56) Entgegenhaltungen:
- DE-A- 4 336 204
- DE-A- 4 336 285
- GB-A- 2 231 117

## Beschreibung

Die Erfindung betrifft einen Schaltschrank mit einem Rahmengestell, das horizontale und vertikale Rahmenprofile aufweist, wobei die horizontalen Rahmenprofile einen Boden- und einen Deckrahmen bilden, wobei in den Eckbereichen des Boden- und des Deckrahmens die vertikalen Rahmenprofile befestigt sind und wobei die vertikalen Rahmenprofile zu der durch die virtuellen vertikalen Außenkanten des Rahmengestelles verlaufenden Querschnittsdiagonalen symmetrisch sind, wobei die vertikalen Rahmenprofile dem Innenraum des Schaltschrankes zugekehrt, mit einer offenen in Profillängsrichtung verlaufenden Innenaufnahme versehen sind, wobei in die Innenaufnahme vertikale Montageschienen einsetzbar sind, wobei an die Innenwände jeweils eine Profilseite angeschlossen ist, die senkrecht zu der Außenseite des Rahmengestelles steht, und wobei die Montageschienen mit Reihen von im Teilungsraster eingebrachten Befestigungsaufnahmen versehen sind (Siehe DE-A-4 336 204).

Bei diesem bekannten Schaltschrank ist das Rahmengestell aus zwölf gleichen Rahmenprofilen zusammengesetzt, die jeweils in den Rahmengestell-Eckbereichen orthogonal aufeinandertreffen. Die Rahmenprofile weisen zwei Innenwände auf, die parallel zu den zugeordneten Seiten des Rahmengestelles ausgerichtet sind. Von diesen Innenwänden sind Profilseiten abgewinkelt, welche rechtwinklig zur Rahmengestellseite stehen. Damit bilden die Innenwände und die Profilseiten eine vertikale, dem Schaltschrank-Innenraum zugewandte Innenkante. An den Rahmenprofilen können zur Befestigung von Einbauten im Schaltschrank-Innenraum Montageschienen befestigt werden. Die Montageschienen sind als geschlossene Hohlprofile ausgebildet und weisen zwei rechtwinklig zueinander stehende Anlageseiten auf. Die beiden anderen Seiten dienen als Montageseiten und sind mit je einer Reihe von Befestigungsaufnahmen versehen.

Die Montageschienen können mit ihren Anlageseiten an die Innenwände des Rahmenprofiles angelegt und hier angebunden, beispielsweise angeschweißt oder angeschraubt werden. Die beiden Montageseiten sind dann dem Schaltschrank-Innenraum zugekehrt.

Es ist Aufgabe der Erfindung, einen Schaltschrank der eingangs erwähnten Art zu schaffen, der für die Anbringung von Einbauten eine große Variabilität bietet.

Diese Aufgabe wird dadurch gelöst, daß die Innenwände und die Profilseiten mit Reihen von im Teilungsraster eingebrachten Befestigungsaufnahmen versehen sind.

Dieser Schaltschrank läßt in seiner Grundversion ohne Montageschienen die Anbringung von Einbauten an den Befestigungsaufnahmen der Rahmenprofile zu. Die erfindungsgemäße Verwendung von vier Reihen von Befestigungsaufnahmen bietet eine große Montagevariabilität. Eine Innenwand und die daran angeschlossene Profilseite ist stets der Schaltschrank-Rückseite bzw. - Vorderseite zugeordnet. Die andere Innenwand ist mit der ihr zugeordneten Profilseite der Schaltschrankseite zugeordnet. Diese Ausgestaltung ermöglicht es, Einbauten individuell der Vorderseite, der Rückseite oder der Seite zuzuordnen. Beispielsweise können parallel zu einer Rückseite und zusätzlich zu einer Seite stehende Wandelemente an den Innenwänden befestigt werden, um dadurch Isolierwände oder Luftführungsschächte auszubilden.

Infolge des Einsatzes von Montageschienen läßt sich die Anbringungs-Vielfalt noch weiter erhöhen. Insbesondere kann die Ausbildung der Reihe (n) von Befestigungsaufnahmen bzgl. ihres Teilungsrasters gegenüber dem Rahmenprofil variiert sein. Damit können dann die Anbringungspunkte entlang des Rahmenprofiles beliebig variiert werden. Die Änderung des Teilungsrasters schafft auch auf einfache Weise die Möglichkeit zur Ausbildung eines Schaltschrankes, mit kombiniert metrischem und zöllischem Einbaumaß. Beispielsweise können die Befestigungsaufnahmen der Rahmenprofile zueinander metrisch, die der Montageschienen zöllisch beabstandet sein.

Nach einer bevorzugten Ausgestaltung der Erfindung ist vorgesehen, daß die vertikalen Rahmenprofile an ihren Profilseiten in parallel zu den Seitenflächen des Rahmengestelles verlaufende Dichtflächen übergehen. An diesen flächigen Profilabschnitten können Seitenwände, eine Rückwand und/oder eine Schranktür dichtend angelegt werden. Durch die Verwendung solcher Dichtflächen ist eine gute Dichtwirkung erzielbar. Insbesondere ist die Anbringung von HF-Dichtungen einfach möglich.

Der Boden- und der Deckrahmen können in ihren Eckbereichen zur Außenseite des Rahmengestelles hin offene Aufnahmen aufweisen, die von den rechtwinklig aufeinanderstoßenden Stirnseiten der horizontalen Rahmenprofile gebildet sind. In die Aufnahmen können die vertikalen Rahmenprofile eingeschoben werden. Sie liegen damit direkt an den Stirnseiten der horizontalen Rahmenprofile an. Die Verwendung eines separaten Eckverbinders ist dann nicht zwingend notwendig, um die horizontalen und die vertikalen Rahmenprofile miteinander zu verbinden. Alleine die Abstützung der vertikalen Rahmenprofile an den Stirnseiten der horizontalen Rahmenprofile ermöglicht eine sichere Anbindung.

Es kann jedoch auch vorgesehen sein, daß in die Aufnahme des Boden- und des Deckrahmens Eckverbinder eingesetzt sind, und daß die vertikalen Rahmenprofile horizontal in die Aufnahmen einschiebbar und an den Eckverbindern festlegbar sind.

Bei dieser Ausgestaltung eines Schaltschrankes ist stets sichergestellt, daß bei einem fertig montierten Rahmengestell auch nachträglich noch ein vertikales Rahmenprofil ausgetauscht werden kann. Dies muß lediglich von den Verbindern losgemacht werden und kann dann horizontal aus den Aufnahmen herausgezogen werden. Auf die gleiche Weise läßt sich das vertikale Rahmenprofil auch wieder horizontal in die Aufnahmen einschieben. Bei abgenommenem vertikalem Rahmenprofil ist der Innenraum des Rahmengestelles leicht zugänglich. Wahlweise können auch zwei vertikale Rahmenprofile einer Seite des Rahmengestelles von dem Rahmengestell entfernt werden. Alleine die beiden verbleibenden vertikalen Rahmenprofile und der Boden- bzw. Deckrahmen bilden eine selbständig stellfähige Einheit, die zu Montagezwecken gut zugänglich ist.

Eine mögliche Erfindungsvariante ist dadurch gekennzeichnet, daß die vertikalen Rahmenprofile mit einer in Profillängsrichtung verlaufenden Außenaufnahme versehen sind, daß die Außenaufnahme von einer Wand gebildet ist, die senkrecht zu der durch die virtuelle Außenkante des Rahmengestelles verlaufenden Querschnittsdiagonalen steht, und daß an die Wand zwei Zentrierabschnitte des vertikalen Rahmenprofiles im Winkel angeschlossen sind.

An der Wand lassen sich Anbauelemente, z.B. eine Türscharnierung, ein Verschlußsystem oder Seiten- bzw. Rückwandbefestigungen anbringen. Die Zentrierabsätze stellen hierbei sicher, daß diese Befestigungselemente stets an ihren vorgegebenen Befestigungsstellen ausgerichtet werden.

Zur Bildung einer separaten Montageeinheit kann vorgesehen sein, daß zumindest die vertikalen Rahmenprofile einer Seite des Rahmengestelles mittels Verbindungsstücken zu einer separaten Montageeinheit zusammengeschlossen sind. Diese separate Montageeinheit kann außerhalb des Rahmengestelles mit elektronischen Einbauten bestückt und anschließend an das Rahmengestell angebaut werden.

Die Verbindungsstücke können hierbei als Montageschienen ausgebildet sein, die eine dem Innenraum des Schaltschrankes zugekehrte Montagefläche aufweisen. Die Montagefläche ist dann vorteilhafterweise mit zumindest einer Reihe von in gleicher Teilung eingebrachten Befestigungsaufnahmen versehen.

Zur Verringerung des Teileaufwandes können Boden- und Deckrahmen vorzugsweise identisch ausgebildet sein.

Denkbar ist, daß der Deckrahmen mit einer Regenrinne ausgestaltet ist, über die das von der Schaltschrank-Oberseite ablaufende Wasser kontrolliert abgeleitet werden kann.

Zur einfachen Anbringung der Montageschiene an der Innenaufnahme des vertikalen Rahmenprofiles kann vorgesehen sein, daß die Montageschiene zumindest einen Profilschenkel mit wenigstens einer Steckaufnahme aufweist, mittels derer sie auf ein Befestigungselement aufsteckbar ist. Das Befestigungselement kann hierbei als separates Teil an dem vertikalen Rahmenprofil angebracht sein. Wenn die Montageschiene auf das Befestigungselement aufgesteckt ist, so ist dieses gegenüber dem vertikalen Rahmenprofil zur Fixierung der Montageschiene verstellbar.

Die Erfindung wird im folgenden anhand von in den Zeichnungen dargestellten Ausführungsbeispielen näher erläutert. Es zeigen:
- Fig. 1: in perspektivischer Seitendarstellung ein aus Rahmenprofilen zusammengesetztes Rahmengestell für einen Schaltschrank,
- Fig. 2: in Explosionsdarstellung einen Teil eines Rahmengestelles,
- Fig. 3: einen Teil eines Rahmengestelles mit einer separaten Montageeinheit,
- Fig. 4: eine Variante zur Anbringung eines vertikalen Rahmenprofiles an horizontalen Rahmenprofilen,
- Fig. 5: in perspektivischer Darstellung ein vertikales Rahmenprofil und eine Montageschiene,
- Fig. 6: zwei vertikale Rahmenprofile, die über horizontale Montageschienen miteinander verbunden sind,
- Fig. 7: das Rahmengestell gemäß Fig. 2 mit einer Seitenwand und
- Fig. 8: das Rahmengestell gemäß Fig. 2 mit einer Schranktür.

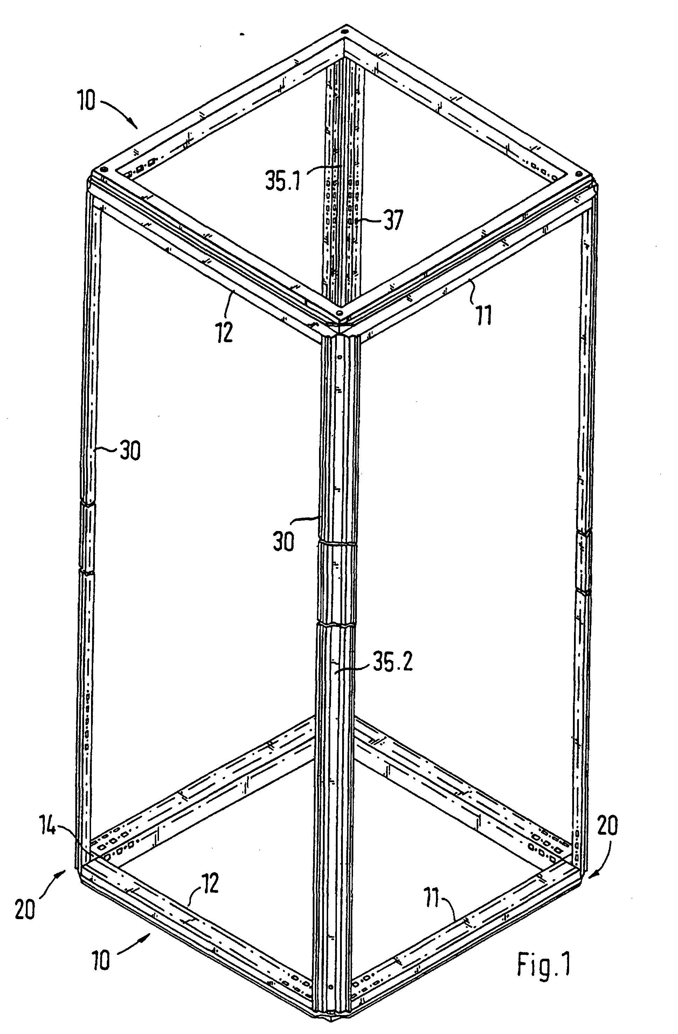

In Fig. 1 ist ein Rahmengestell für einen Schaltschrank gezeigt. Das Rahmengestell ist im wesentlichen aus einem Boden-, einem Deckrahmen 10 und aus vier vertikalen Rahmenprofilen 30 zusammengesetzt. Die vertikalen Rahmenprofile 30 verbinden den Bodenrahmen 10 mit dem Deckrahmen 10. Der Boden- und der Deckrahmen 10 sind gleich aufgebaut, so daß sie gegeneinander vertauscht werden können.

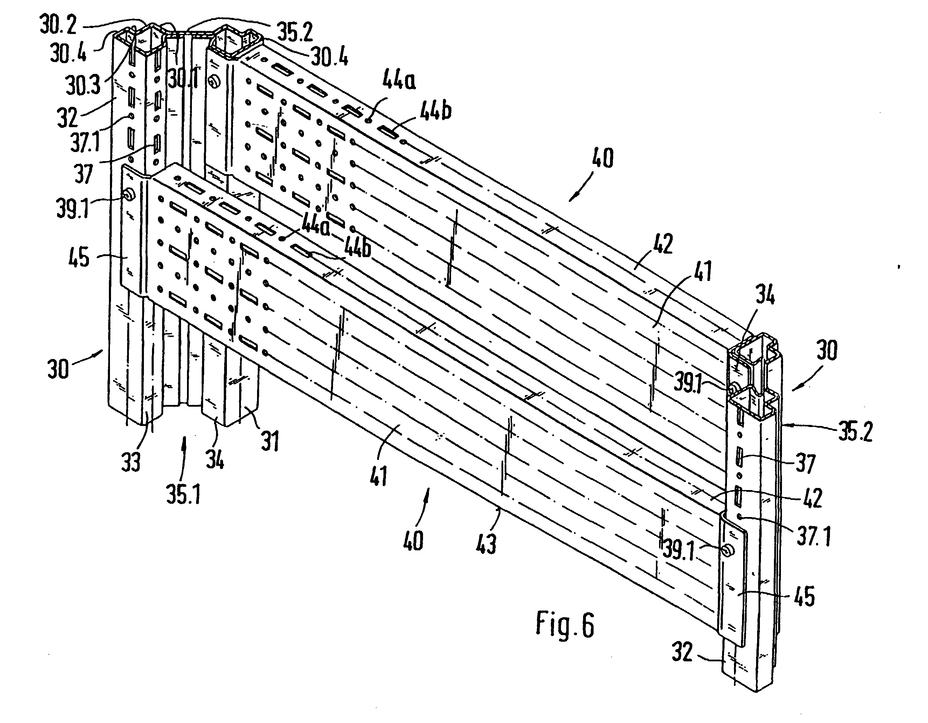

Der Boden- und der Deckrahmen 10 weisen jeweils zwei in Richtung der Schaltschranktiefe und der Schaltschrankbreite verlaufende horizontale Rahmenprofile 11, 12 auf. Diese horizontalen Rahmenprofile 11, 12 sind an ihren, dem Innenraum des Rahmengestelles zugekehrten Profilseiten mit Reihen von Befestigungsaufnahmen 37 versehen. Zwischen den einzelnen Befestigungsaufnahmen 37 sind Gewindeaufnahmen 37.1 angeordnet. Auch die vertikalen Rahmenprofile 30 sind mit zum Innenraum des Rahmengestelles gekehrten Befestigungsaufnahmen 37 bzw. Gewindeaufnahmen 37.1 versehen. An den Befestigungsaufnahmen 37 lassen sich z.B. Montageschienen, wie sie näher in Fig. 6 gezeigt sind, anbringen. Die vertikalen Rahmenprofile 30 sind über Verbinder 14 mit dem Boden- bzw. Deckrahmen 10 verbunden. Die Verbinder 14 sind im Bereich von Eckaufnahmen 20 des Boden- bzw. Deckrahmens 10 angeordnet. Die Befestigung der vertikalen Rahmenprofile 30 an dem Verbinder 14 erfolgt beispielsweise mittels einer Verschweißung.

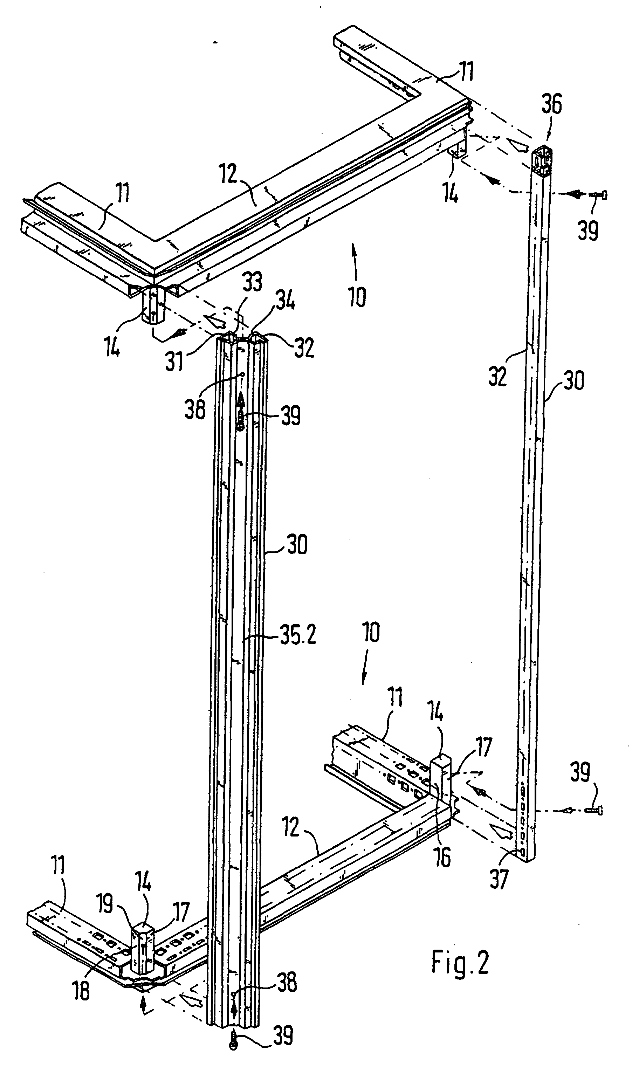

In Fig. 2 ist eine alternative Anbringung der vertikalen Rahmenprofile 30 an den horizontalen Rahmenprofilen 11, 12 dargestellt. An den aneinanderstoßenden Enden der horizontalen Rahmenprofile 11, 12 sind die Aufnahmen 20 ausgebildet. In die Aufnahmen 20 sind die Verbinder 14 eingesetzt. Der Verbinder 14 ist im wesentlichen quaderförmig ausgebildet. An einer seiner vertikalen Enden ist er jedoch mit einer Schrägfläche 19 versehen, in die eine oder mehrere Gewindeaufnahmen 14.1 eingebracht sind. Die Schrägfläche 19 weist zur Außenseite des Rahmengestelles hin. Zur Befestigung des Verbinders 14 ist dieser auf die Aufstandsfläche 20.1 aufgestellt. Mit seinem dem Innenraum des Schaltschrankes zugekehrten Anlageflächen 16 liegt er an den stirnseitigen Enden der horizontalen Rahmenprofile 11, 12 an. In dieser Position kann der Verbinder 14 in die Aufnahme 20 eingeschweißt werden. Der Verbinder 14 ist hierbei exakt rechtwinklig zu den zugeordneten horizontalen Rahmenprofilen 11, 12 angeordnet. Die stirnseitigen Enden der horizontalen Rahmenprofile 11, 12 sowie die Aufstandsfläche 24 bilden eine nach außen offene Aufnahme für das stirnseitige Ende des vertikalen Rahmenprofiles 30. Das vertikale Rahmenprofil 30 besitzt eine zum Innenraum des Rahmengestells gekehrte offene Innenaufnahme 35.1. Diese Innenaufnahme 35.1 ist von zwei Innenwänden 33, 34 des vertikalen Rahmenprofiles 30 begrenzt. Die Innenwände 33, 34 verlaufen flächig in Längsrichtung des Rahmenprofiles 30. Sie stehen rechtwinklig zueinander.

Beim montierten vertikalen Rahmenprofil 30 liegen die Innenwände 33, 34 an Anschlägen 17, 18 des Verbinders 14 an. Rechtwinklig an die Innenwände 33, 34 schließen sich an das vertikale Rahmenprofil 30 Profilseiten 31, 32 an. Diese Profilseiten 31, 32 kommen an den stirnseitigen Enden der horizontalen Rahmenprofile 11, 12 zum liegen. Zur Befestigung der vertikalen Rahmenprofile 30 sind im Bereich ihrer stirnseitigen Enden jeweils eine oder mehrere Schraubaufnahmen 38 eingebracht. Diese Schraubaufnahmen 38 können fluchtend zu den Gewindeaufnahmen 14.1 des Verbinders 14 angeordnet werden. Um eine Montagevereinfachung zu erreichen, ist der Abstand vom stirnseitigen Ende des Rahmenprofiles 30 bis zu der Bohrungsmitte der Schraubaufnahme 38 auf den Abstand der Aufstandsfläche 24 zu der Gewindeaufnahme 14.1 abgestimmt. Durch die Schraubaufnahme 38 kann eine Befestigungsschraube 39 hindurchgeführt und in die Gewindeaufnahme 19 des Verbinders 14 eingeschraubt werden. Hierdurch verspannen sich die Innenwände 31, 34 an den Anschlägen 17 und 18 des Verbinders 14. Gleichzeitig wird das vertikale Rahmenprofil 30 an den stirnseitigen Enden der horizontalen Rahmenprofile 11, 12 in die Aufnahme 20 eingezogen. Das vertikale Rahmenprofil 30 ist in seiner End-Montagestellung fest an den Verbinder 14 angeschlossen und exakt vertikal ausgerichtet. Die Zeichnung verdeutlicht, daß das vertikale Rahmenprofil 30 von der Außenseite des Rahmengestelles her in die Aufnahme 20 eingesetzt werden kann. Die vertikalen Rahmenprofile 30 können also auch bei fertig montiertem Rahmengestell noch nachträglich abgebaut bzw. angebaut werden. Dies hat den entscheidenden Vorteil, daß der Innenraum des Rahmengestelles leicht zugänglich gemacht werden kann. Beispielsweise kann eine selbständig stellfähige Einheit aus Boden- und Deckrahmen 10 und den beiden hinteren vertikalen Rahmenprofilen 30 aufgebaut werden. Dieses selbständig stellfähige Teil-Rahmengestell kann nun mit elektronischen Einbauten oder dgl. bestückt werden. Anschließend lassen sich die beiden vorderen vertikalen Rahmenprofile 40 anbauen, so daß das Rahmengestell komplettiert ist.

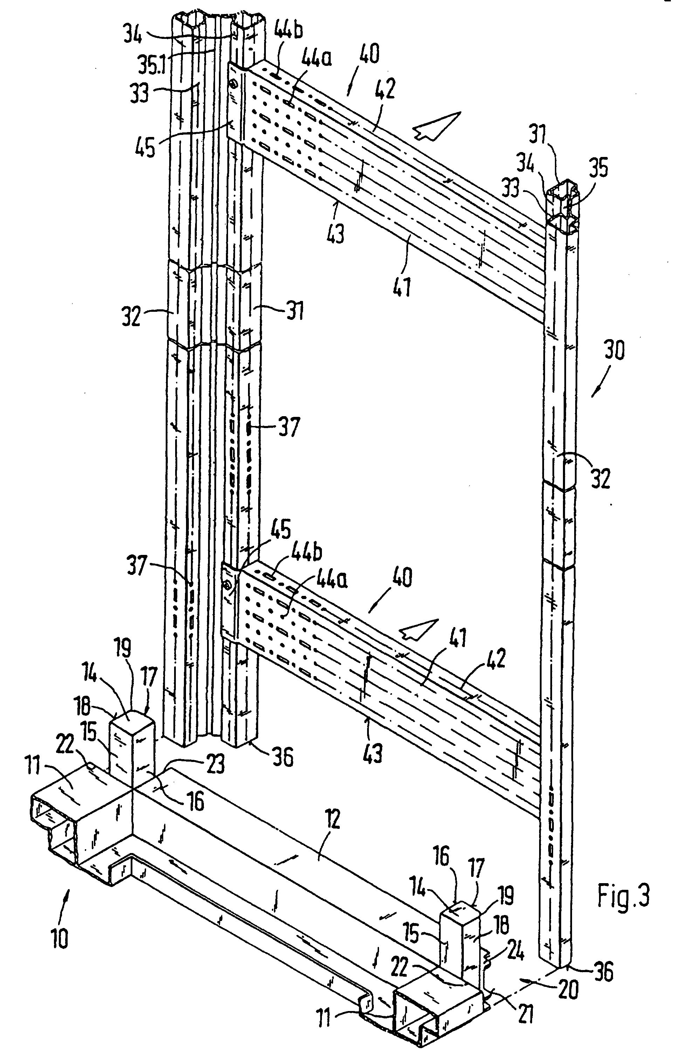

In Fig. 3 ist ein Teil eines Rahmengestelles gezeigt. Hierbei sind die beiden vertikalen Rahmenprofile 30 einer Seite des Rahmengestelles mittels Verbindungsstücken 40 zu einer Montageeinheit zusammengefaßt. Die beiden Verbindungsstücke 40 sind vorliegend als Montageschienen ausgebildet. Diese Montageschienen sind im Querschnitt U-förmig aus einer Montagefläche 41 und zwei daran angeschlossenen Seitenteilen 42, 43 gebildet. Die Seitenteile 42, 43 stehen zueinander parallel. Die Montagefläche 41 ist dem Innenraum des Rahmengestelles zugekehrt. Seitlich ist an die Montagefläche 41 jeweils stirnseitig ein Befestigungsabschnitt 45 angeschlossen. Der Befestigungsabschnitt 45 ist als Lappen ausgebildet, der die zugeordnete Innenwand 34 des vertikalen Rahmenprofiles teilweise überdeckt.

Wie in der Zeichnung angedeutet ist, kann über den Befestigungsabschnitt 45 das Verbindungsstück 40 mit den vertikalen Rahmenprofilen 30 verschraubt werden. An den Verbindungsstücken 40 können elektronische Baueinheiten festgelegt werden. Hierzu sind in die Montageflächen 41 und die Seitenteile 42, 43 Befestigungsaufnahmen 44a, 44b eingebracht. Die Befestigungsaufnahmen 44a, 44b sind in Linien angeordnet und weisen zueinander einen gleichmäßigen Teilungsabstand auf. Der Teilungsabstand ist abgestimmt auf den Teilungsabstand der Befestigungsaufnahmen 37 der vertikalen Rahmenschenkel gewählt.

Bei der in der Zeichnung dargestellten Montageeinheit sind im oberen und im unteren Bereich der vertikalen Rahmenprofile 30 Verbindungsstücke 40 vorgesehen. Es können jedoch auch mehr als zwei Verbindungsstücke 40 eingesetzt sein, um die Montageeinheit zu bilden. Insbesondere können auch Kreuzstreben verwendet werden, die schräg zwischen den beiden vertikalen Rahmenschenkeln 30 eingesetzt sind. Zum Anbau der Montageeinheit an die Bodeneinheit 10 wird diese in ihrer vertikalen Stellposition in die Aufnahmen 20 eingeschoben. Hierbei werden zunächst die vertikalen Rahmenschenkel 30 mit ihren Stirnseiten 36 auf die Aufstandsfläche 24 des Bodenrahmens 10 aufgesetzt. Anschließend wird die komplette Montageeinheit entgegen der in der Zeichnung dargestellten Pfeile in die Aufnahme 20 eingeschoben. Die Innenwände 34 der vertikalen Rahmenprofile 30 gleiten dabei entlang der zugeordneten Anschläge 18 des Eckverbinders 14. Diese Anschläge 18 dienen nun als Führungen. Die Einsetzbewegung ist mit den Profilseiten 32 der vertikalen Rahmenprofile 30 begrenzt. Diese kommen an den Stirnseiten der horizontalen Rahmenprofile 11 zum liegen. Gleichzeitig schlägt die Innenwand 34 an dem Anschlag 17 des Verbinders 14 an. Zwischen den beiden Anschlägen 17 und 18 des Eckverbinders 14 ist eine angeschrägte Flanke 19 vorgesehen. Diese steht in die Innenaufnahme 35.1 der vertikalen Rahmenprofile 30 vor. Zwischen der Flanke 19 und der Bodenfläche der Innenaufnahme 35.1 ist ein Freiraum gebildet. Mit diesem Freiraum ist sichergestellt, daß die vertikalen Rahmenprofile 30 stets nur mit ihren Innenwänden 33, 34 an den Anschlägen 17, 18 anliegen. Hierdurch läßt sich die Montageeinheit exakt an der Bodeneinheit 10 ausrichten. Zur Fixierung ist die Montageeinheit mit dem Bodenrahmen 10 verschraubt. Die Art der Verschraubung der vertikalen Rahmenprofile 30 mit den Eckverbindern 40 kann der Fig. 2 entnommen werden. Es ist jedoch auch möglich, die vertikalen Rahmenprofile 30 direkt mit dem Bodenrahmen 10 und dem Eckverbinder 14 zu verschweißen. Zusätzlich zu dem Bodenrahmen 10 wird der vorzugsweise baugleiche Deckrahmen 10 verwendet. Der Deckrahmen 10 wird im oberen Bereich an die vertikalen Rahmenprofile 30 angebunden. Mit weiteren vertikalen Rahmenprofilen 30 kann dann das Rahmengestell komplettiert werden.

Die Montageeinheit wird vorteilhafterweise an der Rückseite des Schaltschrankes angeordnet. Es ist jedoch auch möglich, die Montageeinheit an einer Seite des Rahmengestelles vorzusehen. Bei der Montageeinheit sind eine Vielzahl von Befestigungsmöglichkeiten gegeben. Insbesondere können die einander paarweise zugeordneten Innenwände 33, 34 bzw. die Profilseiten 31, 32 der vertikalen Rahmenprofile 30 dazu verwendet sein, zwei zueinander parallel versetzte Montageebenen auszubilden. In der Zeichnung ist die erste Montageebene durch die Montageflächen 41 der Verbindungsstücke 40 teilweise gebildet. Solche versetzte Montageebenen lassen sich auch senkrecht zu der Montageeinheit im Rahmengestell verwirklichen. Hierzu werden die Befestigungsaufnahmen 37, 37.1 der Innenwände 33 bzw. der Profilseiten 31 verwendet.

Um eine Verletzungsgefahr zu vermeiden, sind die Aufstandsflächen 24 der Aufnahmen 20 mit einer Profilierung 21 versehen. Die Profilierung 21 ist hierbei an die Außengeometrie der vertikalen Rahmenprofile 30 angepaßt. Damit stehen keine Kanten der Bodeneinheit über die vertikalen Rahmenprofile vor.

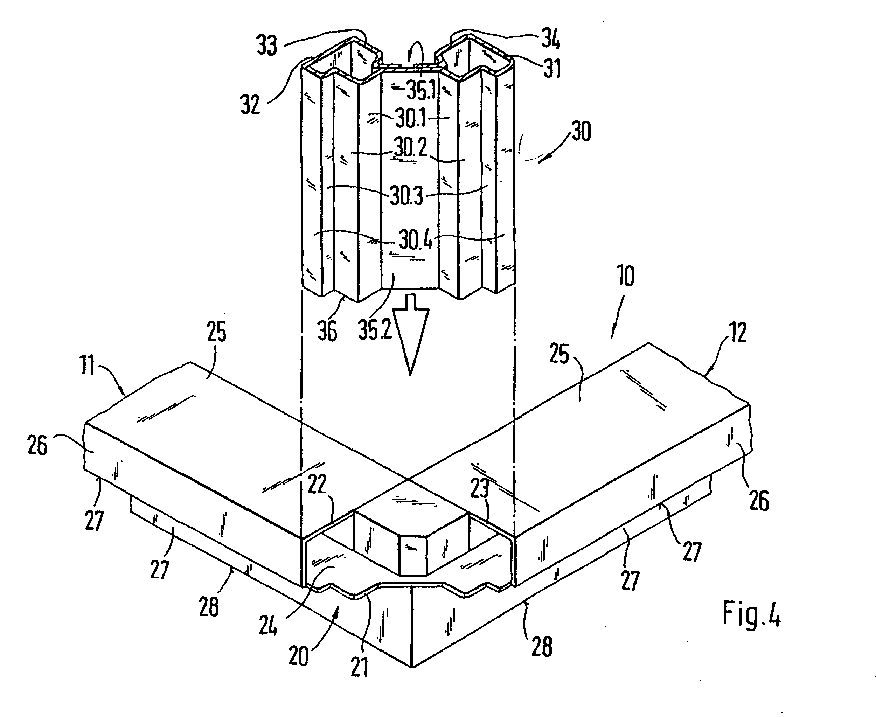

In Fig. 4 ist ein Bodenrahmen 10, der aus horizontalen Rahmenprofilen 11, 12 zusammengesetzt ist, ausschnittsweise dargestellt. Die horizontalen Rahmenprofile 11, 12 weisen die gleiche Querschnittsgeometrie auf. Der gesamte Bodenrahmen 10 ist aus vier horizontalen Rahmenprofilen 11, 12 aufgebaut, wie dies bereits der Fig. 1 vorentnommen werden kann. Zur Herstellung des Bodenrahmens 10 kann ein einziges Stanz-Biegeteil verwendet sein, so daß die einzelnen horizontalen Rahmenprofile 11, 12 einstückig miteinander verbunden sind. Die horizontalen Rahmenprofile 11, 12 weisen eine horizontale Innenwand 25 auf, an die sich eine um 90° nach unten abgewinkelte Abkantung 26 anschließt.

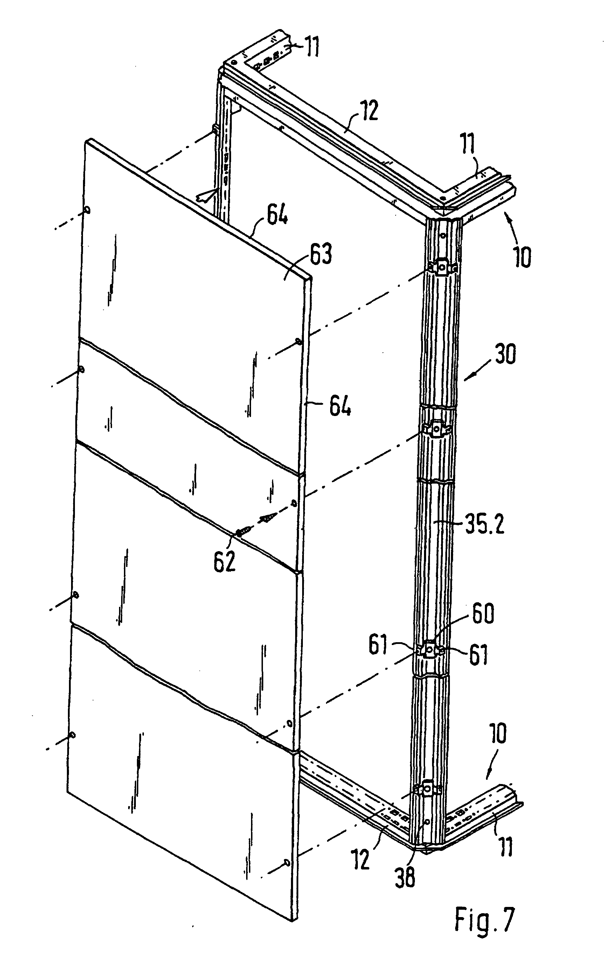

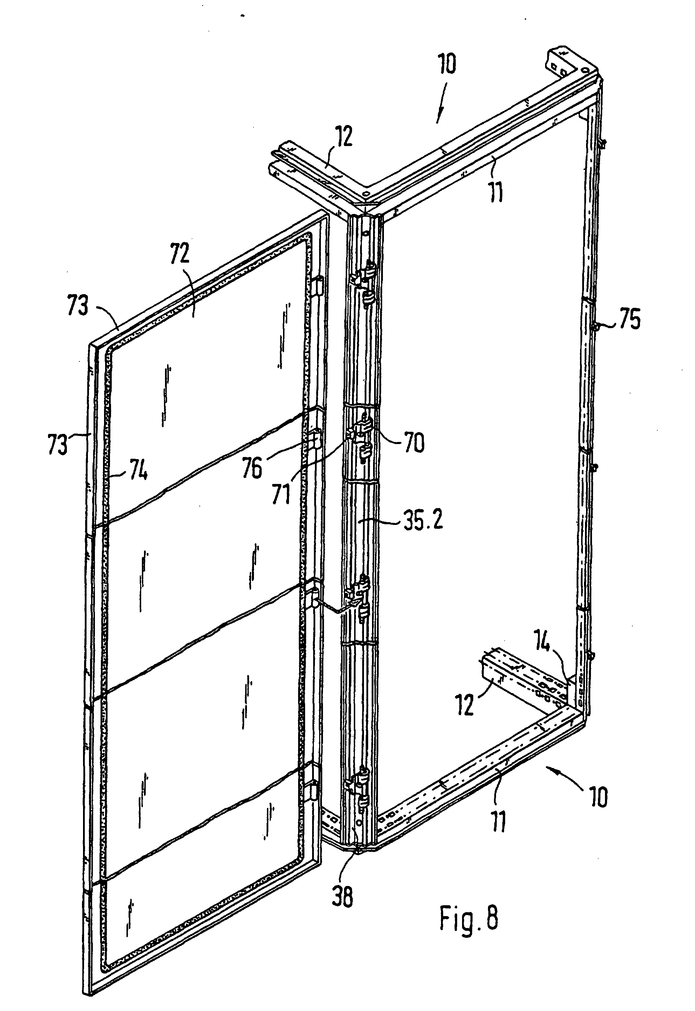

Die Abkantung 26 dient zur Anlage einer Seitenwand 63 (beispielsweise gemäß Fig. 7) oder einer Schranktür 72 (beispielsweise gemäß Fig. 8). Für die Abdichtung kann zwischen der Seitenwand 63 bzw. der Schranktür 72 und der Abkantung 26 ein Dichtelement eingesetzt sein. Von der Abkantung 26 ist ein horizontaler Steg 27.1 rechtwinklig zurückgebogen. Dieser Steg 27.1 geht in die nach unten gerichtete Wand 27 über. In dem für den Steg 27.1 und der Wand 27 gebildeten Freiraum kann eine Abkantung der Seitenwand 63 bzw. der Schranktür 72 aufgenommen werden.

Die Wand 27 ist mit einem Bodenteil 28 abgeschlossen. Hier kann der Bodenrahmen 10 auf dem Boden aufgestellt werden. An den stirnseitigen Enden sind die horizontalen Rahmenprofile 11, 12 an ihren Stegen 27.1 mit der Profilierung 21 versehen. Die Profilierung 21 ist hierbei wieder an die Außengeometrie des vertikalen Rahmenprofiles 30 angepaßt. In vertikaler Richtung beabstandet von dem Steg 27.1 sind an den Innenwänden 25 endseitig Anschläge 22, 23 für das vertikale Rahmenprofil 30 angebracht.

In die Aufnahme 20 ist der Verbinder 14 eingestellt. Der Verbinder 14 steht hierbei auf dem Bodenteil 28 auf. Seitlich liegt er an den Wänden 27 an. Mit dem Verbinder 14 können die horizontalen Rahmenprofile 11, 12 verbunden, beispielsweise verschweißt sein. Dies dient zur Aussteifung des Boden/Deckrahmens 10.

Das vertikale Rahmenprofil 30 weist eine als Wand ausgebildete Außenaufnahme 35.2 auf, die zur Außenseite des Rahmengestelles gerichtet ist. Beidseitig der Wand erstrecken sich zwei Hohlkammern. Zur Bildung der Hohlkammern ist der Blechzuschnitt für das vertikale Rahmenprofil mehrfach abgekantet. Im einzelnen schließt sich an die Wand ein Zentrierabschnitt 30.1 an, der über ein Übergangsstück 30.2 in eine Abwinklung 30.3 übergeht. Die Abwinklung 30.3 ist hierbei vertikal zu den zugeordneten Seiten des Rahmengestelles angeordnet. An die Abwinklungen 30.3. schließen sich rechtwinklig die Dichtflächen 30.4 an. Zur Bildung der Profilseiten 31, 32 sind die Dichtflächen 30.4 rechtwinkling in Richtung zum Innenraum des Rahmengestelles hin abgebogen. Die Profilseiten 31, 32 gehen rechtwinklig in die Innenwände 33, 34 über. Die Innenwände 33, 34 stehen damit parallel zu den zugeordneten Seiten des Rahmengestelles. Die Innenwände 33, 34 liegen über abgebogene Endstücke an der Wand, die die Außenaufnahme 35.2 bildet, an. Zwischen den beiden Innenwänden 33, 34 entsteht die Innenaufnahme 35.1, die zum Innenraum des Rahmengestelles hin orientiert ist.

Das vertikale Rahmenprofil 30 wird in die nach außen offene Aufnahme 20 des Bodenrahmens 10 eingeschoben. Hierbei gleiten die Profilseiten 31, 32 an den Anschlägen 22, 23 der horizontalen Rahmenprofile 11, 12 entlang. Mit seiner Stirnseite 36 steht das vertikale Rahmenprofil 30 stirnseitig auf der Aufstandsfläche 24 des Bodenrahmens 10 auf. In dieser Position ist das vertikale Rahmenprofil 30 an seinen Profilseiten 31, 32 ausgerichtet. Damit sind auch die Innenwände 33, 34 zum Innenraum des Rahmengestelles hin positioniert.

Die exakte vertikale Ausrichtung des Rahmenprofiles 30 ist mit der Profilierung 21 möglich. Da diese an die Außengeometrie des vertikalen Rahmenprofiles 30 angepaßt ist, kann es hier bündig angelegt werden.

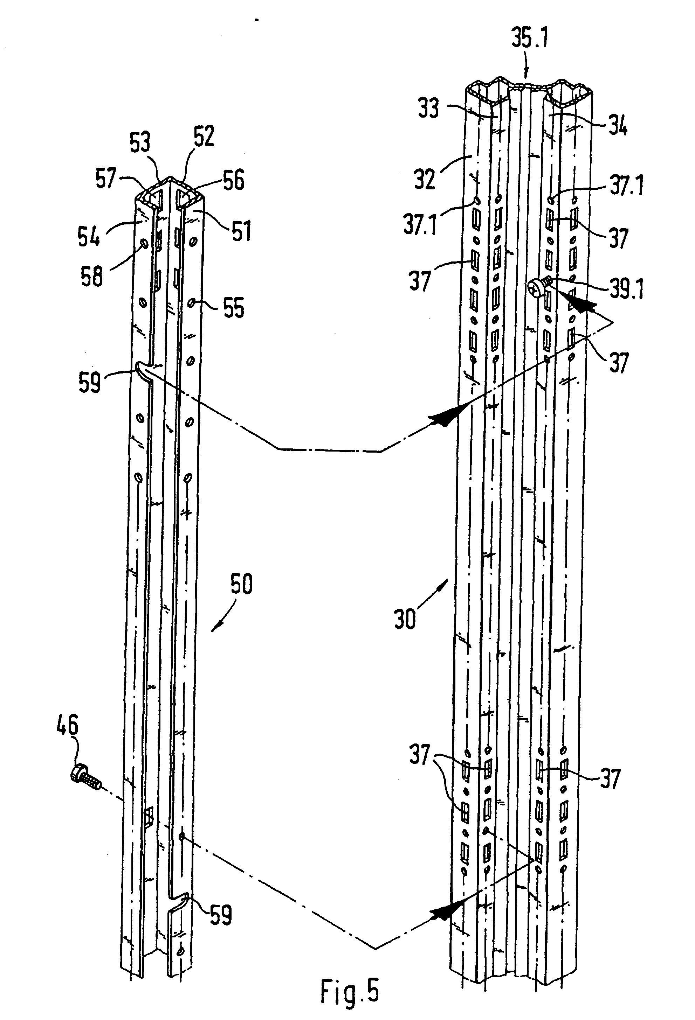

In Fig. 5 ist näher gezeigt, wie eine Montageschiene 50 an einem der vertikalen Rahmenprofile 30 angebracht werden kann. Von dem vertikalen Rahmenprofil 30 ist in der Zeichnung gemäß Fig. 5 nur ein Teil gezeigt. Die Montageschiene 50 hat eine diesem Teil entsprechende Länge. Mit dieser Darstellung wird verdeutlicht, daß die Montageschiene 50 abschnittsweise an beliebigen Orten entlang des vertikalen Rahmenprofils anbringbar ist.

Selbstverständlich können auch die zum Einsatz kommenden Montageschienen 50 in ihrer Länge variieren. Sie können sich insbesondere auch über die gesamte axiale Länge der vertikalen Rahmenprofile 30 erstrecken.

Die Montageschiene 50 ist im Querschnitt quadratisch aufgebaut. Dieser Querschnitt wird von zwei rechtwinklig aneinander gebundenen Montageabschnitten 52, 53 und zwei Profilabschnitten 51, 54 gebildet. Die Profilabschnitte 51, 54 sind jeweils von den freien Enden der Montageabschnitte 52, 53 abgekantet. So bildet sich ein Hohlprofil, das im Bereich zwischen den Profilabschnitten 51, 54 offen ist. In die Montageabschnitte 52, 53 sind Montageaufnahmen 56, 57 eingearbeitet. Auf den Profilseiten 51, 54 sind Befestigungslöcher 55, 58 ausgestanzt. Die Montageaufnahmen 56, 57 und die Befestigungslöcher 55, 58 sind in gleicher Teilung zueinander beabstandet angeordnet. Die Befestigungslöcher 55, 58 sind dabei so angeordnet, daß sie mit einer Montageaufnahme 56, 57 des parallel zum jeweiligen Profilabschnittes stehenden Montageabschnittes fluchten. Die Befestigungslöcher 55, 58 sind damit über die Montageaufnahmen 56, 57 zugänglich. Zur Befestigung der Montageschiene 50 an dem vertikalen Rahmenprofil 30 sind in die Profilseiten 51, 54 Steckaufnahmen 59 eingebracht. Die Steckaufnahmen 59 sind schlitzförmig ausgebildet und zum freien vertikalen Ende der Profilabschnitte 51, 54 hin geöffnet. Pro Profilabschnitt 51, 54 ist vorliegend eine Steckaufnahme 59 verwendet. Zur Festlegung der Montageschiene 50 wird zunächst ein Befestigungselement 39.1 in eine Gewindeaufnahme 37.1 des vertikalen Rahmenprofiles 30 eingeschraubt. In welcher der Innenwände 33, 34 des Rahmenprofiles 30 das Befestigungselement 39.1 (im folgenden Schraube genannt) eingeschraubt wird, ist frei wählbar und wird im wesentlichen von der Zugänglichkeit bestimmt. Auf den Bolzenabschnitt der Schraube wird die Montageschiene 50 mit ihrer Steckaufnahme 59 des Profilabschnittes 54 aufgesteckt. Diese Aufsteckbewegung wird durch die Pfeildarstellung der Fig. 5 symbolisiert. Wenn die Montageschiene 50 so an dem Rahmenprofil 30 angebracht ist, ist sie vorpositioniert. Durch eine fluchtend zu der Steckaufnahme 59 angeordnete Montageaufnahme 56 des Montageabschnittes 52 ist die Schraube an ihrem Schraubenkopf für ein Werkzeug zugänglich. Wenn die Schraube weiter in die Gewindeaufnahme 39.1 eingedreht wird, so verspannt sich der Schraubenkopf auf dem Profilabschnitt 51. Die Montageschiene 50 wird in die Innenaufnahme 35.1 des Rahmenprofiles 30 eingezogen. Die beiden Profilabschnitte 51, 54 liegen dann an den Innenwänden 33, 34 an. Die Montageschiene 50 ist exakt an dem Rahmenprofil 30 ausgerichtet. Zur zusätzlichen Befestigung können durch einzelne Montageaufnahmen 56, 57 Schrauben hindurchgereicht, in die Befestigungslöcher 55, 58 eingeführt und in die jeweils zugeordneten Gewindeaufnahmen 37.1 eingeschraubt werden. Je nach Art und Größe der Belastung mit der die Montageschiene 50 beaufschlagt wird, können ein oder mehrere zusätzliche Befestigungselemente 39.1 Verwendung finden.

In Fig. 6 ist gezeigt, wie an zwei vertikalen Rahmenprofilen 30 Montageschienen 40 angebracht werden können. Die Montageschienen 40 entsprechen im wesentlichen den Montageschienen 40, wie sie in der Fig. 3 gezeigt sind. Es soll an dieser Stelle noch einmal verdeutlicht werden, wie sich an den erfindungsgemäßen Rahmenprofilen 30 zwei verschiedene, zueinander parallel angeordnete Montageebenen ausbilden lassen. Die Montageebenen sind, wie bereits erwähnt, durch die Montageflächen 41 der Montageschienen 40 geschaffen.

Die Fig. 7 zeigt, wie an der Außenaufnahme 35.2 der vertikalen Rahmenprofile 30 Befestigungselemente 60 angebracht werden können. Die Befestigungselemente 60 weisen zwei Befestigungsstellen mit Gewindebohrungen 61 auf. Zur Anbringung von Seitenwänden 63 werden Schrauben 62 verwendet. Dies Schrauben 62 werden durch Bohrungen der Seitenwände 63 hindurchgesteckt und in die Gewindebohrungen 61 der Befestigungselemente 60 eingeschraubt. Die Seitenwand 63 legt sich dabei mit ihrer Innenseite dichtend an die Dichtfläche 30.4 des vertikalen Rahmenprofiles 30 an. Die in der Fig. 7 gezeigten Befestigungselemente 60 lassen sich zur Befestigung zweier rechtwinklig zueinanderstehender Seitenwände 63 an dem Rahmengestell verwenden.

In Fig. 8 ist gezeigt, wie Scharnierteile 70 an der Außenaufnahme 35.2 befestigt werden können. Zur Anscharnierung einer Schranktür 72 sind auf dem Türblatt weitere Scharnierteile 76 angebracht. Diese weiteren Scharnierteile 76 können an die Scharnierteile 70 angebunden werden. Auf der Innenwand der Schranktür 72 ist eine Dichtung 74 aufgebracht. Die Dichtung 74 liegt dichtend auf der Dichtfläche 30.2 der vertikalen Rahmenprofile 30 an. Die Darstellung gemäß Fig. 8 läßt erkennen, daß das Scharnierteil 70 an einer Seitenwandbefestigung eine Gewindebohrung 71 trägt. Es läßt sich also an der rechtwinklig zu der Vorderseite des Rahmengestelles eine Seitenwand an dem Scharnierteil 70 befestigen.

## Patentansprüche

1. Schaltschrank mit einem Rahmengestell, das horizontale und vertikale Rahmenprofile 11, 12 und 30) aufweist, wobei die horizontalen Rahmenprofile (11, 12) einen Boden- und einen Deckrahmen (10) bilden, wobei in den Eckbereichen des Boden- und des Deckrahmens (10) die vertikalen Rahmenprofile (30) befestigt sind und wobei die vertikalen Rahmenprofile (30) zu der durch die virtuellen vertikalen Außenkanten des Rahmengestelles verlaufenden Querschnittsdiagonalen symmetrisch sind, wobei die vertikalen Rahmenprofile (30) dem Innenraum des Schaltschrankes zugekehrt, mit einer offenen in Profillängsrichtung verlaufenden Innenaufnahme (35.1) versehen sind, wobei in die Innenaufnahme (35.1) vertikale Montageschienen (50) einsetzbar sind, wobei an die Innenwände (33,34) jeweils eine Profilseite (31,32) angeschlossen ist, die senkrecht zu der Außenseite des Rahmengestelles steht, und wobei die Montageschienen (50) mit Reihen von im Teilungsraster eingebrachten Befestigungsaufnahmen (56, 57) versehen sind,
dadurch gekennzeichnet,
daß die Innenwände (33,34) und die Profilseiten (31,32) mit Reihen von im Teilungsraster eingebrachten Befestigungsaufnahmen (37,37.1) versehen sind.

2. Schaltschrank nach Anspruch 1,
dadurch gekennzeichnet,
daß die vertikalen Rahmenprofile (30) an ihren Profilseiten (31,32) in parallel zu den Seitenflächen des Rahmengestelles verlaufende Dichtflächen (30.4) übergehen.

3. Schaltschrank nach Anspruch 1 oder 2,
dadurch gekennzeichnet,
daß der Boden- und der Deckrahmen (10) in ihren Eckbereichen zur Außenseite des Rahmengestelles hin offene Aufnahmen (20) aufweisen, wobei die Aufnahmen (20) von den rechtwinklig aneinanderstoßenden Stirnseiten der horizontalen Rahmenprofile gebildet sind.

4. Schaltschrank nach Anspruch 3,
dadurch gekennzeichnet,
daß in die Aufnahmen (20) des Boden- und des Deckrahmens (10) Eckverbinder (14) eingesetzt sind, und
daß die vertikalen Rahmenprofile (30) horizontal in die Aufnahmen (20) einschiebbar und an den Eckverbindern (14) festlegbar sind.

5. Schaltschrank nach einem der Ansprüche 1 bis 4,
dadurch gekennzeichnet,
daß die vertikalen Rahmenprofile (30) mit einer in Profillängsrichtung verlaufenden Außenaufnahme (35.2) versehen sind,
daß die Außenaufnahme (35.2) von einer Wand gebildet ist, die senkrecht zu der durch die virtuellen Außenkanten des Rahmengestelles verlaufenden Querschnittsdiagonalen steht, und
daß an die Wand zwei Zentrierabschnitte (30.1) des vertikalen Rahmenprofils (30) im Winkel angeschlossen sind.

6. Schaltschrank nach einem der Ansprüche 1 bis 5,
dadurch gekennzeichnet,
daß zumindest die vertikalen Rahmenprofile (30) einer Seite des Rahmengestelles mittels Verbindungsstücken (40) zu einer separaten Montageeinheit zusammengeschlossen sind.

7. Schaltschrank nach Anspruch 6,
dadurch gekennzeichnet,
daß die Verbindungsstücke (40) als Montageschienen ausgebildet sind, die eine dem Innenraum des Schaltschrankes zugekehrte Montagefläche (41) aufweisen, und
daß die Montagefläche (41) mit zumindest einer Reihe von in gleicher Teilung eingebrachten Befestigungsaufnahmen (44a, 44b) versehen ist.

8. Schaltschrank nach einem der Ansprüche 1 bis 7,
dadurch gekennzeichnet,
daß der Boden- und der Deckrahmen (10) als gleiche Baugruppen ausgebildet sind.

9. Schaltschrank nach einem der Ansprüche 1 bis 8,
dadurch gekennzeichnet,
daß die in der Innenaufnahme (35.1) des vertikalen Rahmenprofils (30) festlegbare Montageschiene (50) zumindest einen Profilschenkel (51, 54) mit wenigstens einer Steckaufnahme (59) aufweist, mittels der sie auf ein Befestigungselement (39.1), das am vertikalen Rahmenprofil (30) angebracht ist, aufsteckbar ist, und
daß das Befestigungselement (39.1) gegenüber dem vertikalen Rahmenprofil (30) zur Fixierung der Montageschiene (50) verstellbar ist.

10. Schaltschrank nach einem der Ansprüche 1 bis 9,
dadurch gekennzeichnet,
daß der Boden- und/oder der Deckrahmen (10) mit einer umlaufenden, nur in den Eckbereichen des Rahmengestelles unterbrochenen Regenrinne (12a) versehen sind.

## Claims

1. Switch cabinet with a framework which has horizontal and vertical frame profiles (11, 12 and 30), the horizontal frame profiles (11, 12) forming a base frame and a top frame (10), the vertical frame profiles (30) being fastened in the corner regions of the base frame and of the top frame (10), and the vertical frame profiles (30) being symmetrical to the cross-section diagonals which run through the virtual vertical outer edges of the framework, the vertical frame profiles (30), directed towards the interior of the switch cabinet, being provided with an open inner mount (35.1) which runs in the longitudinal profile direction, it being possible for vertical installation rails (50) to be inserted into the inner mounting (35.1), there being connected to the inner walls (33, 34) in each case one profile side (31, 32) which is located perpendicularly to the outer side of the framework, and the installation rails (50) being provided with rows of fastening mounts (56, 57) introduced at regular spacings, characterized in that the inner walls (33, 34) and the profile sides (31, 32) are provided with rows of fastening mounts (37, 37.1) introduced at regular spacings.

2. Switch cabinet according to Claim 1, characterized in that, on their profile sides (31, 32), the vertical frame profiles (30) merge into sealing surfaces (30.4) running parallel to the side surfaces of the framework.

3. Switch cabinet according to Claim 1 or 2, characterized in that the base frame and the top frame (10) have, in their corner regions, mounts (20) which are open in the direction of the outer side of the framework, the mounts (20) being formed by the end sides of the horizontal frame profiles, said end sides butting against one another at right angles.

4. Switch cabinet according to Claim 3, characterized in that corner connectors (14) are inserted into the mounts (20) of the base frame and of the top frame (10), and in that the vertical frame profiles (30) can be pushed horizontally into the mounts (20) and secured on the corner connectors (14).

5. Switch cabinet according to one of Claims 1 to 4, characterized in that the vertical frame profiles (30) are provided with an outer mount (35.2) which runs in the longitudinal profile direction, in that the outer mount (35.2) is formed by a wall which is located perpendicularly to the cross-section diagonals which run through the virtual outer edges of the framework, and in that two centring sections (30.1) of the vertical frame profile (30) are connected to the wall at an angle.

6. Switch cabinet according to one of Claims 1 to 5,
characterized in that at least the vertical frame profiles (30) of one side of the framework are combined by means of connecting elements (40) to form a separate insulation unit.

7. Switch cabinet according to Claim 6, characterized in that the connecting elements (40) are designed as installation rails which have an installation surface (41) which is directed towards the interior of the switch cabinet, and in that the installation surface (41) is provided with at least one row of fastening mounts (44a, 44b) introduced at identical spacings.

8. Switch cabinet according to one of Claims 1 to 7, characterized in that the base frame and the top frame (10) are designed as identical subassemblies.

9. Switch cabinet, according to one of Claims 1 to 8, characterized in that the installation rail (50), which can be secured in the inner mount (35.1) of the vertical frame profile (30), has at least one profile leg (51, 54) with at least one plug-in mount (59) by means of which said rail can be plugged on to a fastening element (39.1) which is provided on the vertical frame profile (30), and in that the fastening element (39.1) can be adjusted in relation to the vertical frame profile (30) in order to fix the installation rail (50).

10. Switch cabinet according to one of Claims 1 to 9, characterized in that the base frame and/or the top frame (10) are/is provided with an encircling rain channel (12a) which is only interrupted in the corner regions of the framework.

## Revendications

1. Armoire de commande comprenant un châssis, qui présente des profilés de châssis horizontaux et verticaux (11, 12 et 30), dans laquelle les profilés de châssis horizontaux (11, 12) forment un cadre inférieur et un cadre supérieur (10), dans laquelle les profilés de châssis verticaux (30) sont fixés dans les zones de coin des cadres inférieur et supérieur (10) et dans laquelle les profilés de châssis verticaux (30) sont symétriques par rapport aux diagonales en coupe transversale s'étendant à travers les arêtes externes verticales virtuelles du châssis, dans laquelle les profilés de châssis verticaux (30) tournés vers l'espace intérieur de l'armoire de commande sont pourvus d'un logement intérieur ouvert (35.1) s'étendant dans la direction longitudinale des profilés, dans laquelle on peut insérer dans le logement intérieur (35.1) des rails de montage verticaux (50), dans laquelle est raccordé aux parois intérieures (33, 34) à chaque fois un côté profilé (31, 32), qui est perpendiculaire au côté extérieur du châssis, et dans laquelle les rails de montage (50) sont pourvus de séries de logements de fixation (56, 57) ménagées dans la grille de répartition, caractérisée en ce que les parois intérieures (33, 34) et les côtés profilés (31, 32) sont pourvus de séries de logements de fixation (37, 37.1) ménagées dans la grille de répartition.

2. Armoire de commande selon la revendication 1, caractérisée en ce que les profilés de châssis verticaux (30) se fondent, sur leurs côtés profilés (31, 32), en surfaces d'étanchéité (30.4) s'étendant parallèlement aux surfaces latérales du châssis.

3. Armoire de commande selon la revendication 1 ou 2, caractérisée en ce que les cadres inférieur et supérieur (10) présentent, dans leurs zones de coin, des logements (20) ouverts vers le côté extérieur du châssis, les logements (20) étant formés par les côtés frontaux des profilés de châssis horizontaux s'aboutant perpendiculairement l'un sur l'autre.

4. Armoire de commande selon la revendication 3, caractérisée en ce que sont insérés dans les logements (20) du cadre inférieur et du cadre supérieur (10) des raccords de coin (14) et en ce que les profilés de châssis verticaux (30) peuvent être glissés horizontalement dans les logements (20) et être fixés aux raccords de coin (14).

5. Armoire de commande selon l'une quelconque des revendications 1 à 4, caractérisée en ce que les profilés de châssis verticaux (30) sont pourvus d'un logement extérieur (35.2) s'étendant dans la direction longitudinale des profilés, en ce que le logement extérieur (35.2) est formé d'une paroi qui est perpendiculaire aux diagonales en coupe transversale s'étendant à travers les arêtes externes virtuelles du châssis, et en ce que deux sections de centrage (30.1) du profilé de châssis vertical (30) sont raccordées à la paroi dans l'angle.

6. Armoire de commande selon l'une quelconque des revendications 1 à 5, caractérisée en ce qu'au moins les profilés de châssis verticaux (30) d'un côté du châssis sont assemblés les uns aux autres au moyen de pièces de raccord (40) pour former une unité de montage séparée.

7. Armoire de commande selon la revendication 6, caractérisée en ce que les pièces de raccord (40) se présentent sous la forme de rails de montage qui présentent une surface de montage (41) tournée vers l'espace interne de l'armoire de commande, et en ce que la surface de montage (41) est pourvue d'au moins une série de logements de fixation (44a, 44b) ménagées en répartition à équidistance.

8. Armoire de commande selon l'une quelconque des revendications 1 à 7, caractérisée en ce que les cadres inférieur et supérieur (10) se présentent sous la forme de composants identiques.

9. Armoire de commande selon l'une quelconque des revendications 1 à 8, caractérisée en ce que le rail de montage (50) qui peut être fixé dans le logement intérieur (35.1) du profilé de châssis vertical (30) présente au moins une aile de profilé (51, 54) avec au moins un logement d'emboîtement (59), au moyen duquel il peut être emboîté sur un élément de fixation (39.1), qui est monté sur le profilé de châssis vertical (30), et en ce que l'élément de fixation (39.1) peut être déplacé par rapport au profilé de châssis vertical (30) pour fixer le rail de montage (50).

10. Armoire de commande selon l'une quelconque des revendications 1 à 9, caractérisée en ce que les cadres inférieur et/ou supérieur (10) sont pourvus d'une gouttière périphérique (12a) qui n'est interrompue que dans les zones de coin du châssis.
